# EUROPEAN PATENT APPLICATION

(11) **EP 1 498 686 A1**
(43) Date of publication of application: **19.01.2005**
(21) Application number: 03719116.0
(22) Date of filing: 16.04.2003
(51) Int. Cl.: F42B 3/12, B60R 21/26, B60R 22/46

(54) **GAS GENERATOR**

(30) Priority: 16.04.2002 JP 2002112782
(71) Applicant: Nippon Kayaku Kabushiki Kaisha, Tokyo 102-8172 (JP)
(72) Inventor: KUBO, Dairi, Himeji-shi, Hyogo 670-0893 (JP); TANAKA, Koji, c/o NIPPON KAYAKU KABUSHIKI KAISHA, Himeji-shi, Hyogo 679-2123 (JP)
(74) Representative: Dronne, Guy
(86) International application number: PCT/JP2003/004820
(87) International publication number: WO 2003/087705

(57) **Abstract**

A gas generator comprising, at least, a cup member (3) containing a gas generant (2) which burns to generate gas, and a holder (6) provided with an ignition device that has at least one conductive pin (4d) and ignites the gas generant (2), wherein: the holder (6) is provided with one or more through holes (6d) through which the conductive pins (4d) pass and one or more non-through holes (6e) through which the conductive pins (4d) do not pass; and, with respect to a rupture pressure from a gas generant (2) side to the holder (6) , when a pressure occurs toward an outside of the gas generator, the rupture pressure of the through hole (6d) through which the conductive pin (4d) passes is adjusted to be higher than the rupture pressure of the non-through hole (6e) through which the conductive pin (4d) does not pass.

## Description

### TECHNICAL FIELD

The present invention relates to a gas generator and, more particularly, to a gas generator suitable to actuate a restraint system for a vehicle occupant such as a seat belt pretensioner for a vehicle.

### BACKGROUND ART

The seat belt pretensioner is known as one of the safety components for protecting an occupant from impact in the event of a vehicle crash. This seat belt pretensioner is driven by a large quantity of gas generated from a gas generator with high temperature and high pressure, to protect an occupant. This gas generator includes a squib and a gas generant, and ignites and burns the gas generant by igniting the squib in the event of a crash, to thereby quickly generate gas.

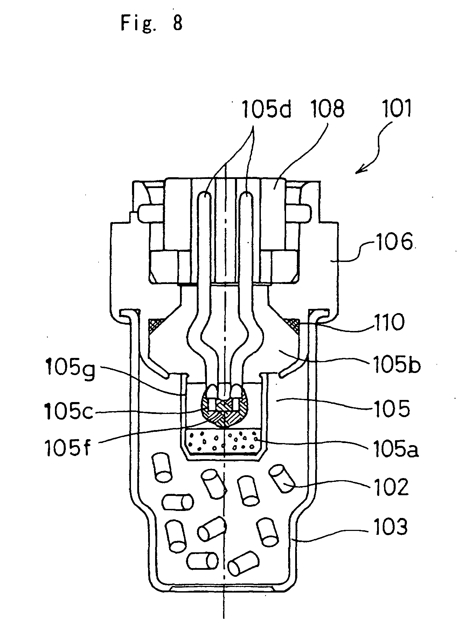

One example of the prior art gas generators is illustrated in Fig. 8. The gas generator 101 of Fig. 8 comprises a cup member 103 containing a gas generant 102, a squib 105 having a shell 105g containing an ignition agent 105a, and a holder 106 to which the squib 105 and the cup member 103 are fitted to encapsulate the gas generant 102. In this case, in the squib 105, two standing conductive pins 105d are integrally formed with a body 105b made of a resin for the purpose of receiving signals from a non-illustrated sensor and applying electric current thereto. A bridgewire 105f bridges between the tip portions of the conductive pins 105d, and an fuse head 105c covering the bridgewire 105f is disposed in contact with the ignition agent 105a. The holder 106 is assembled to the seat belt pretensioner, and made of materials such as iron, aluminium and the like so that the gas generator may not be scattered by the inner pressure when it is actuated. The cup member 103 is formed with a step portion, and its diameter broadens toward a base portion thereof. Also, the squib 105 is caulked in the holder 106 with an O-ring 110 to prevent external moisture from entering. And, the holder 106 is further provided with a shorting clip 108 fitted thereto for short-circuiting between the conductive pins 105d of the squib 105 so as to prevent from improper actuation due to static electricity and the like before actual installation in a vehicle.

When this gas generator 101 receives a signal from the non-illustrated sensor, the fuse head 105c in the squib 105 ignites at first, and the ignition agent 105a ignites. And then, by the flame of the ignition agent 105a, the gas generant 102 is ignited and burned. Thereby, this gas generator 101 generates gas quickly.

However, it can be assumed that the pressure in the seat belt pretensioner may extremely increase when the gas generator is actuated in case that a vehicle fire occurs, in case that a failure occurs in the operation of the seat belt pretensioner, or the like case. In order to deal with such a situation, it is required to design the structure of the gas generator such that it can withstand high pressures. If a gas generator does not have a sufficient withstand pressure structure, the gas generator may be ruptured. And the gas generator itself, the conductive pins or other heavy objects may become scattering objects then rush out of pretensioner.

It is an object of the present invention to provide a gas generator which can prevent the heavy obj ects such as conductive pins from scattering to the outside even when actuated under a high pressure or a high temperature.

### SUMMARY OF THE INVENTION

A gas generator of the present invention comprises, at least, a cup member containing a gas generant which burns to generate gas, and a holder provided with an ignition device that has at least one conductive pin and ignites the gas generant. The holder is provided with one or more through holes through which the conductive pins pass, and one or more non-through holes through which the conductive pins do not pass. With respect to a rupture pressure from said gas generant side to the holder, when a pressure occurs toward an outside of the gas generator, the rupture pressure of the through hole through which the conductive pin passes is adjusted to be higher than the rupture pressure of the non-through hole through which the conductive pin does not pass.

By this configuration, even if a pressure becomes high inside of the seat belt pretensioner because of an activation of the gas generator in case that a vehicle fire occurs or in case that a failure occurs in the operation of the seat belt etc., the gas generator itself and heavy objects such as the conductive pin portions and the like will not scatter toward the outside of the seat belt pretensioner because the non-through hole through which the conductive pin does not pass will be firstly ruptured and then the pressure will be released to the outside through the ruptured non-through hole. Here, the non-through hole through which the conductive pin does not pass is not the hole into which the conductive pin should be inserted. The non-through hole is a hole provided in a part of the holder so as to open toward the outside of the holder and can be ruptured by a high pressure (hereinafter, the non-through hole means the same above.)

Also, the gas generator of the present invention is characterized in that a rupture open area of the non-through hole through which the conductive pin does not pass is equal to or larger than a rupture open area of the through hole through which the conductive pin passes.

By this configuration, it is possible to adjust the rupture pressure of the through hole through which the conductive pin passes to be higher than the rupture pressure of the non-through hole through which the conductive pin does not pass.

Furthermore, in the gas generator of the present invention, the holder made of a resin is formed integrally with the ignition device.

Since the holder and the ignition device are integrated with each other, it is possible to reduce the parts count and the production cost.

Still further, in the gas generator of the present invention, the base portion of the non-through hole through which the conductive pin does not pass is made of the resin.

By this configuration, it is possible to easily form the base portion of the non-through hole through which the conductive pin does not pass and, in addition, to adjust the thickness, the diameter, and the like thereof.

Still further, in the gas generator of the present invention, the holder is insert molded by the resin with a reinforcement member which is made of a rigid material having a higher strength than the resin.

Since the reinforcement member which is the rigid body is insert molded in the holder made of the resin, it is possible to increase the strength of the holder and to inhibit the deformation of the holder during fixing the cup member to the holder by, e.g., crimping.

Still further, in the gas generator of the present invention, the reinforcement member is provided with one or more through holes through which the conductive pins pass and one or more non-through holes through which the conductive pin do not pass.

The reinforcement member having the rigid body is provided with the holes, and the rupture open area is substantially equal to the area of the hole formed through the reinforcement member. Thereby, the rupture open area can be surely regulated.

Still further, in the gas generator of the present invention, a depth of the non-through hole through which the conductive pin does not pass is within a range of 60 to 90 % of a length of the holder from one end to the other end thereof inclusive of the non-through hole through which the conductive pin does not pass and the base portion of the non-through hole.

By this configuration, the gas generator itself and heavy objects such as the conductive pin portions and the like do not scatter toward the outside of the seat belt pretensioner, because the non-through hole through which the conductive pin does not pass is firstly ruptured and then the pressure is released to the outside through the ruptured non-through hole.

Still further, in the gas generator of the present invention, a relationship among a minimum thickness of the base portion of a connector attachment hole of the holder, a diameter of the base portion of the connector attachment hole, the thickness of the base portion of the non-through hole through which the conductive pin does not pass, and a diameter of an inscribed circle in the non-through hole, satisfies the following relationship:
"the thickness of the base portion of the non-through hole through which the conductive pin does not pass < (the diameter of the inscribed circle in the non-through hole × the minimum thickness of the base portion of the connector attachment hole) / the diameter of the base portion of the connector attachment hole".

By this configuration, the gas generator itself and heavy objects such as the conductive pin portions and the like do not scatter toward the outside of the seat belt pretensioner, because the non-through hole through which the conductive pin does not pass is firstly ruptured and then the pressure is released to the outside through the ruptured non-through hole.

### BRIEF EXPLANATION OF THE DRAWINGS

Fig. 1 is a schematic cross sectional view showing an exemplary embodiment of a gas generator according to the present invention as viewed from the A" direction along the A-A' line of Fig. 3.

Fig. 2 is a schematic cross sectional view showing the exemplary embodiment of the gas generator according to the present invention as viewed from the B" direction along the B-B' line of Fig. 3.

Fig. 3 is a schematic outline as viewed from the above in an axial direction of the exemplary embodiment of the gas generator according to the present invention.

Fig. 4 is a schematic outline as viewed from the above in the axial direction of the exemplary embodiment of the gas generator according to the present invention.

Fig. 5 is a schematic cross sectional view showing another exemplary embodiment of the gas generator according to the present invention as viewed from the A" direction along the A-A' line of Fig. 4.

Fig. 6 is a schematic cross sectional view showing the another exemplary embodiment of the gas generator according to the present invention as viewed from the B" direction along the B-B' line of Fig. 4.

Fig. 7 is a schematic external view showing a reinforcement member for use in the exemplary embodiment of the gas generator in accordance with the present invention.

Fig. 8 is a schematic cross sectional view showing a conventional gas generator.

### BEST MODE FOR CARRYING OUT THE INVENTION

In the following, an exemplary embodiment of a gas generator of the present invention will be explained in conjunction with the accompanying drawings.

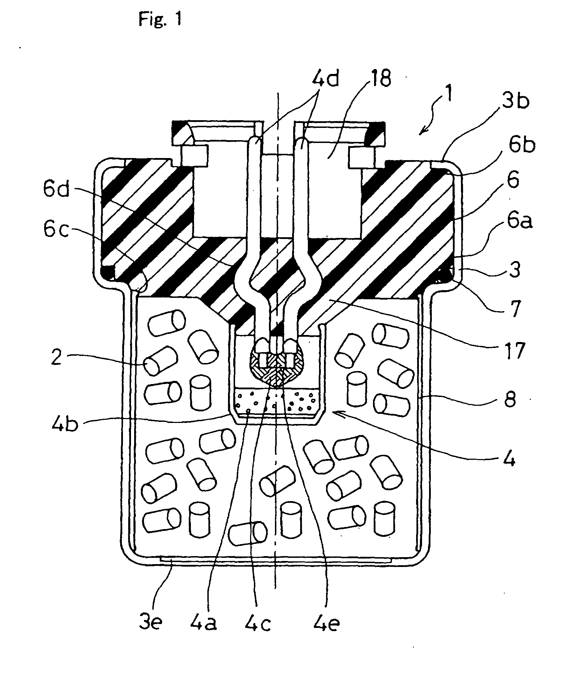

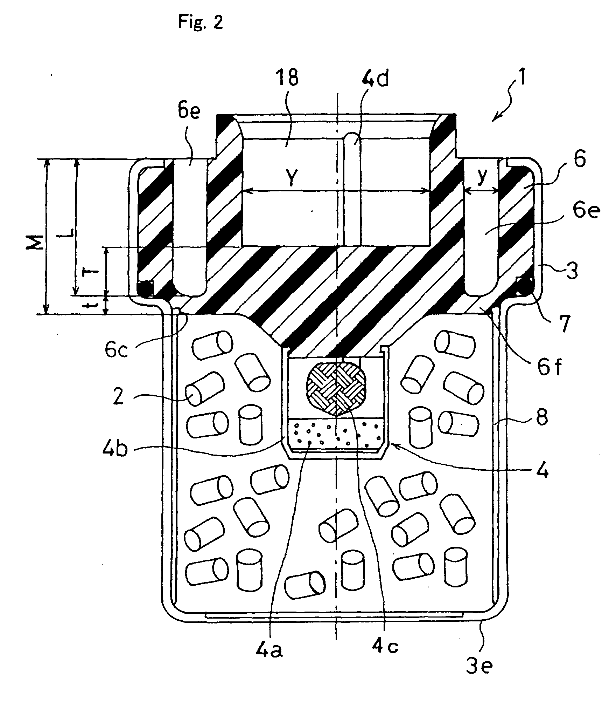

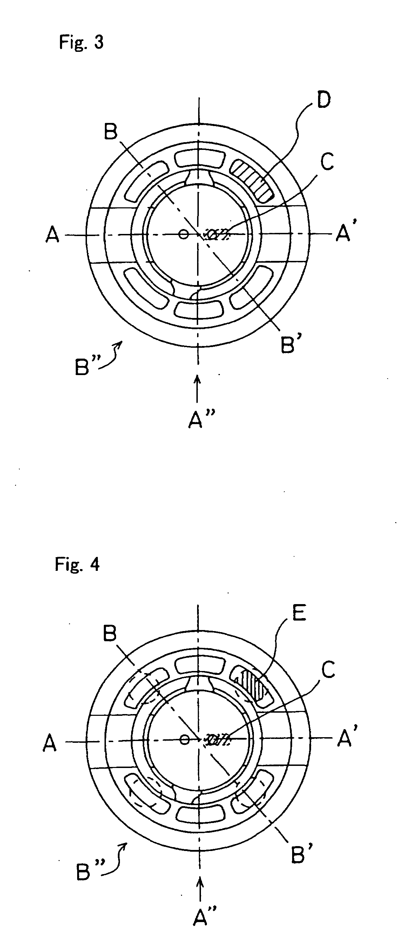

The gas generator 1 as illustrated in Fig. 1 to Fig. 3 serves to actuate a restraint system for a vehicle occupant such as a seat belt pretensioner for the vehicle, and quickly generate gas by igniting a squib and burning a gas generant 2. Fig. 1 is a view of the gas generator 1 according to the exemplary embodiment of the present invention as viewed from the A" direction along the A-A' line of Fig. 3, which is a view as viewed from the above in the axial direction thereof. Fig. 2 is a view as viewed from the B" side along the B-B' line of Fig. 3 in the same manner.

The gas generator 1 comprises a cup member 3 and a holder 6. The cup member 3 has a cylinder shape with a base, and contains the gas generant 2 which generates gas by burning. The holder 6 is integrally formed with an ignition unit 4 serving as an ignition device for igniting the gas generant 2 by an electrification and fitted into the cup member 3 in order that the ignition unit 4 is located within the gas generant 2.

The ignition unit 4 integrally formed with the holder 6 comprises a shell 4b containing an ignition agent 4a, two conductive pins 4d, a bridgewire 4e connected between the tip ends of the two conductive pins 4d on the side of the ignition agent 4a, and an fuse head 4c formed to enclose the bridgewire 4e and disposed in contact with the ignition agent 4a.

The holder 6 is substantially in the form of a cylinder with a base. There is a stepped portion between the holder 6 and an axial member 17. The axial member 17 has a diameter reduced from a diameter of the holder 6 to protrude toward the gas generant 2 side, and has a substantially partially conical portion. The holder 6 is formed with a connector attachment hole 18 opening toward on the side opposite to the axial member 17. The tip end of the axial member 17 is fitted into the shell 4b. Also, an O-ring reception groove 6a is formed on the periphery of the holder 6. An O-ring 7 is placed as a seal member in the O-ring reception groove 6a along the inner peripheral surface of the cup member 3 to maintain the sealing performance between the holder 6 and the cup member 3. Also, a crimping stepped portion 6b reduced in diameter is formed on the periphery of the holder 6 at the edge on the connector attachment hole 18 side. Furthermore, the holder 6 is formed with non-through holes 6e through which the conductive pins 4d do not pass. A base portion 6f of the non-through holes 6e are formed in the holder 6. The base portion 6f is made of a resin. In addition, an inner cylinder 8 located along the inside of the cup member 3 is fitted into an inner cylinder reception groove 6c formed on the holder 6.

This holder 6 can be formed by injecting a resin or the similar resin mixed with glass fibers, a carbon additive and/or the like into a non-illustrated mold. There can be used resins such as polybutylene terephthalate, polyethylene terephthalate, nylon 6, nylon 66, polyphenylene sulfide, polyphenylene oxide, polyethylene imide, polyether imide, polyether ether ketone, polyether sulfone.

In addition, the holder 6 is integrally provided with the respective conductive pins 4d of the ignition unit 4. The respective conductive pins 4d are integrated with the resin of the holder 6 by disposing them inside the mold when the resin is injected into the above mold.

In case of two conductive pins 4d, the two conductive pins 4d are arranged in parallel with the axis of the gas generator 1, and pass through the holder 6 in the axial direction. Also, the respective conductive pins 4d are curved in the holder 6 and projected into the connector attachment hole 18 of the holder 6 and into the shell 4b. The respective conductive pins 4d are made of a conductive material such as a stainless steel, an iron-nickel alloy or the like. The respective conductive pins 4d are electrically isolated from each other by the resin of the holder 6. Furthermore, the bridgewire 4e is deposited onto the respective conductive pins 4d in the shell 4b by welding and the like process, and the fuse head 4c is formed to enclose the tip ends of the respective conductive pins 4d and the bridgewire 4e. The fuse head 4c is in contact with the ignition agent 4a in the shell 4b. As has been discussed above, the holder 6 is integrally provided with the ignition unit 4 comprising the shell 4b, the ignition agent 4a, the respective conductive pins 4d and the like. In addition, the respective conductive pins 4d projected into the connector attachment hole 18 are provided with a non-illustrated shorting clip for short circuiting between the respective conductive pins 4d in order to prevent improper actuation of the ignition unit 4. The short circuiting is released when installed in the seat belt pretensioner and the like.

The cup member 3 of the gas generator 1 is made of a metallic material such as a stainless steel, aluminium, iron and the like in the form of a cup, and contains the gas generant 2 which generates gas by burning. A scored section 3e of a base portion of the cup member 3 is provided with a several scores. When a pressure in the cup member 3 rises, the several scores are ruptured in the pressure lower than the rupture pressure of the non-through hole through which the conductive pin 4d does not pass. Thereby, a gas discharge opening is formed and the inside of the cup member 3 is communicated with the outside. The holder 6 is fitted into the cup member 3. And the cup member 3 is fixed to the holder 6 by a portion 3b crimped on the crimping stepped portion 6b at the opening edge of the cup member 3. Alternatively, it is possible for the cup member 3 to be provided with a scored section in a side cylinder of the cup member. And gas is discharged from the side cylinder of the cup member 3.

Also, as illustrated in Fig. 2, in the gas generator, a depth L (mm) of the non-through hole 6e through which the conductive pin 4d does not pass is preferably within a range of 60 to 90 % of a length M (mm). The length M (mm) is a length of the holder 6 from one end to the other end thereof inclusive of the non-through hole 6e through which the conductive pin 4d does not pass and a base portion 6f of the non-through hole 6e. Also, as illustrated in Fig. 2, a relationship among a minimum thickness T (mm) of a base portion of a connector attachment hole 18 of the holder 6, a diameter Y(mm) of the base portion of the connector attachment hole 18, the thickness t(mm) of a base portion 6f of the non-through hole 6e through which the conductive pin 4d does not pass and a diameter y(mm) of an inscribed circle in the non-through hole 6e, preferably satisfies the following relationship: "the thickness t(mm) of the base portion of said non-through hole 6e through which the conductive pin 4d does not pass < {the diameter y (mm) of the inscribed circle in the non-through hole 6e × the minimum thickness T(mm) of the base portion of the connector attachment hole 18} / the diameter Y(mm) of the base portion of the connector attachment hole 18".
And more preferably, the relationship satisfies the following relationship:
"the thickness t (mm) of the base portion of the non-through hole 6e through which the conductive pin 4d does not pass < 0.7 × {the diameter y (mm) of the inscribed circle in the non-through hole 6e × the minimum thickness T(mm) of the base portion of the connector attachment hole 18} / the diameter Y(mm) of the base portion of the connector attachment hole 18".

Next, the method of manufacturing the gas generator 1 will be explained.

At first, the method of molding the holder 6 integrated with the ignition unit 4 will be explained. First, a desired shape is insert molded by injecting a resin or the similar resin mixed with glass fibers, a carbon additive and/ or the like into a non-illustrated mold in which the conductive pins 4d are placed in advance. There is the resin such as polybutylene terephthalate, polyethylene terephthalate, nylon 6, nylon 66, polypropylene sulfide, polypropylene oxide, polyethylene imide, polyether imide, polyether ether ketone, polyether sulfone. At this time, the conductive pins 4d of the ignition unit are insert molded in the holder 6 without any gap. In this structure, holes 6d through which the conductive pins 4d pass (located in the holder 6 as well as the holes 6d described below) are completely occupied by the conductive pins 4d without any gap.

Next, the tip ends of the respective conductive pins 4d projected from the axial member 17 of the holder 6 are connected with the bridgewire 4e, and the bridgewire 4e is enclosed by the fuse head 4c. The axial member 17 of the holder 6 is fitted into the shell 4b containing the ignition agent 4a, so that the ignition unit 4 is integrated with the holder 6. Further, the O-ring 7 is disposed in the O-ring reception groove 6a of the holder 6. Also, the inner cylinder 8 is fitted onto the inner cylinder reception grooves 6c formed in the holder 6.

Next, after the gas generant 2 as measured in advance is loaded into the cylindrical portion 8 with the holder 6 as the bottom. The holder 6 is fitted into the cup member 3 through the opening thereof, which is then crimped in the radially inward direction (toward the crimping stepped portion 6b) to form a crimped edge 3b so that the cup member 3 is fixed to the holder 6 by the engagement between the crimped edge 3b and the crimping stepped portion 6b. At this time, the O-ring 7 disposed in the O-ring reception groove 6a is elastically deformed between the O-ring reception groove 6a and the inner surface of the cup member 3 during the fitting insertion into the cup member 3, providing the sealing performance therebetween. Next, a shorting clip, not shown in the figure, is fitted between the respective conductive pins 4d projected into the connector attachment hole 18 of the holder 6, for preventing improper actuation of the ignition unit 4, to complete the gas generator 1.

In the following, the operation of the gas generator 1 of the present invention will be explained. In the operation of the gas generator 1, current is passed between the conductive pins 4d of the ignition unit 4 to generate Joule heat in the bridgewire 4e, instantly followed by ignition of the fuse head 4c with the Joule heat and then ignition of the ignition agent 4a. The elevation of the pressure in the shell 4b causes the rupture of the shell 4b to blow out the flame of the ignition agent 4a by which the gas generant 2 starts burning to discharge gas. In the course of time, the pressure inside the cup member 3 causes the rupture of the scores of the scored section 3e formed in the bottom surface of the cup member 3 to introduce the gas into a seat belt pretensioner and the like not shown in the figure. Then, the seat belt pretensioner and the like is actuated by the high pressure gas to fasten a seat belt. Alternatively, it is possible to provide a scored section in the side cylinder of the cup member 3 and discharge the gas from the side cylinder of the cup member 3.

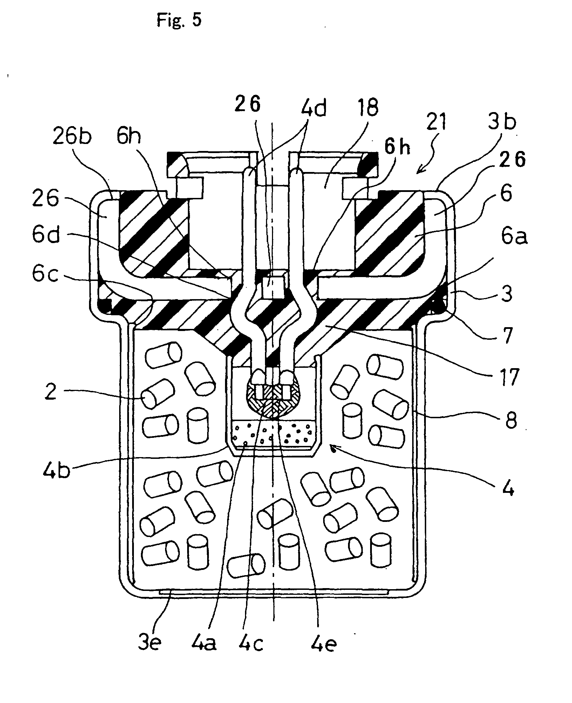

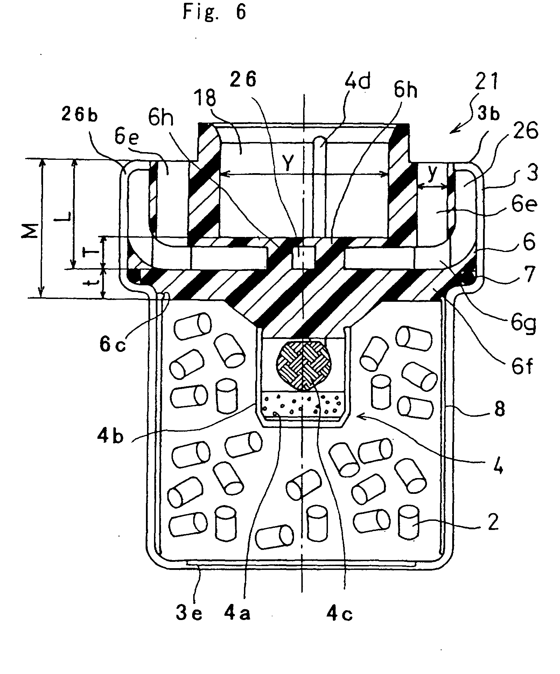

Next, another embodiment of the gas generator of the present invention will be explained in conjunction with Fig. 5 and Fig. 6. Fig. 5 is a view of the gas generator 21 according to the present invention as viewed from the A" direction along the A-A' line of Fig. 4, which is a view as viewed from the above in the axial direction thereof. Fig. 6 is a view as viewed from the B" direction along the B-B' line of Fig. 4 in the same manner.

The gas generator 21 as illustrated in Fig. 4 to Fig. 6 differs from the gas generator 1 as illustrated in Fig. 1 to Fig. 3 in that a reinforcement member 26 is insert molded in the holder 6, and in that the rupture open area of the non-through holes 6e through which the conductive pins 4d do not pass is small. The other structure is same as that of the gas generator 1 as illustrated in Fig. 1 to Fig. 3, and therefore detailed explanation is omitted while making use of the same references.

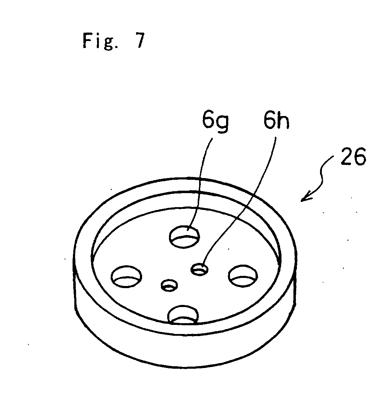

Fig. 7 is an external view showing a reinforcement member 26 for use in the gas generator 21 of the present invention. In the gas generator 21, the reinforcement member 26 substantially in the form of a cup or dish is integrally insert molded inside the holder 6 made of a resin. This type of holder 6 can be easily manufactured by disposing the reinforcement member 26 together with the conductive pins 4d inside a metal mold when a resin is inj ected into the mold, as has been discussed above. This reinforcement member 26 is made of a metallic material such as a stainless steel or SPCC (JIS G 3141), or a reinforced plastic made of a thermosetting resin or the like. The reinforcement member 26 is partially exposed from the holder 6 at the outer periphery thereof to form a crimping stepped portion 26b onto which the opening edge of the cup member 3 is crimped to form a crimped edge 3b. Also, the bottom portion of the reinforcement member 26 is formed with holes 6h through which the conductive pins 4d pass and non-through holes 6g through which the conductive pins 4d do not pass. The non-through holes 6g through which the conductive pins 4d do not pass, which is formed in the bottom portion of this reinforcement member 26, serves to form through holes in a base portion 6f of the non-through hole of the holder 6, thereby releasing the pressure inside the gas generator therethrough when an unexpected high pressure arises in the cup member 3. Then, the pressure inside the gas generator can be released from the gas generator through the non-through holes 6e through which the conductive pins 4d do not pass, so that it is possible to preserve the through holes 6d through which the conductive pins 4d pass without the rupture thereof.

In the above structure of the gas generator 21, while moisture is prevented by the O-ring 7 from entering the inside of the gas gnerator containing the gas generant 2, since the reinforcement member 26 made of a rigid material having a higher strength than the resin as described above is located to provide the area, to which a force (crimping force) is applied during crimping the cup member 3, i.e., the crimping stepped portion 26b, it is possible to inhibit the deformation of the holder 6 due to the crimping force by the reinforcement member 26. It is also possible to inhibit the deformation of the holder 6 due to the thermal expansion of the resin by the reinforcement member 26. Accordingly, the generation of a gap due to the crimping force, the thermal expansion or the like can be effectively avoided. Also, the accuracy of the crimping process for attaching the cup member 3 to the holder 6 in the manufacture of the gas generator 21 need not be so high as required of the gas generator 1, resulting in the facilitation of the manufacturing process. Furthermore, by virtue of the reinforcement member 26, the holder 6 is more surely prevented from rupturing or generating flying fragments when the gas generator 21 is actuated, as compared with the similar case without the reinforcement member 26.

While the gas generator 1 and the gas generator 21 as have been discussed above are provided with ignition device integrated with the holder, the gas generator of the present invention is not limited thereto and can be implemented, for example, with a holder and ignition device (an ignition device) provided as separate components.

Next, the rupture pressure and the rupture open area in accordance with the gas generators 1 and 21 of the present invention will be explained.

The rupture pressure of the through holes 6d through which the conductive pins 4d pass is the pressure required for releasing these pins out of the holder 6 after rupturing, in a high pressure, rupturing the vicinity of the through holes 6d through which the conductive pins 4d pass. Incidentally, for example, in the case where the two conductive pins 4d are tightly connected in the gas generator, the rupture pressure means the pressure required for releasing the connected conductive pins 4d out of the holder 6 after rupturing, in a high pressure, the vicinity of the through holes 6d through which the conductive pins 4d pass.

The rupture pressure of the non-through holes 6e through which the conductive pins 4d do not pass is the pressure required for rupturing a base portion of the non-through hole 6e of the holder 6. Accordingly, the thicker the base portion 6f of the non-through hole 6e is, the higher the rupture pressure becomes, so that the adjustment is possible. Alternatively, depending upon the case, it is possible to provide a notched section (scores) and the like in the base portion 6f of the non-through hole 6e to reduce the rupture pressure.

In this case, gas is introduced into a seat belt pretensioner or the like, during the usual operation of the gas generator, by rupturing the scored section of the cup member 3. Accordingly, in the case of the usual operation, there is not a rupture in the vicinity of the through holes 6d through which the conductive pins 4d pass and in the vicinity of the non-through holes 6e through which the conductive pins 4d do not pass. From this fact, the respective rupture pressures inclusive of the rupture pressure of the scored section of the cup member satisfy: (the rupture pressure of the scored section of the cup member) < (the rupture pressure of the non-through holes through which the conductive pins do not pass) < (the rupture pressure of the through holes through which the conductive pins pass).

Next, the rupture open area will be explained. The rupture open area is represented by the project area, as viewed from the above in the axial direction of the gas generator, of a hole which is formed at the through holes 6d through which the conductive pins 4d pass after the conductive pins 4d fly off from the holder 6 or a hole which is formed at the non-through holes 6e through which the conductive pins 4d do not pass after the base portion 6f of the non-through hole 6e is ruptured. Accordingly, the rupture open area of the through holes 6d through which the conductive pins 4d pass is indicated by "C" in Fig. 3 and is substantially equivalent to the project area of the conductive pins 4d as viewed from the above in the axial direction of the gas generator. On the other hand, the rupture open area of the non-through holes 6e through which the conductive pins 4d do not pass is indicated by "D" in Fig. 3 and is substantially equivalent to the area of the base portion 6f of the non-through 6e. The rupture open area of the non-through holes 6e through which the conductive pins 4d do not pass is indicated by "E" in Fig. 4 and is substantially equivalent to the overlapping area of the base portion 6f of the non-through hole 6e of the holder 6 and the open area F of the hole 6g opened through the reinforcement member 26 (in Fig. 4, a circle plotted by broken line corresponds to the open area F of the hole 6g opened through the reinforcement member 26).

As thus described, by setting at a low value the rupture pressure of the non-through holes 6e through which the conductive pins 4d do not pass, the pressure inside the gas generator is released to the outside from the through hole formed in the non-through holes 6e through which the conductive pins 4d do not pass when an unexpected high pressure arises, and as a result the through holes 6d through which the conductive pins 4d pass can be preserved without rupture. Particularly, when the gas generator is actuated in a high temperature condition such as a vehicle fire, this is effective in the case where the resin of the holder 6 is a thermoplastic resin to quickly decrease the strength if the temperature rises beyond the glass transition point. In the case of the conventional techniques, only the through holes 6d through which the conductive pins 4d pass are formed, and the vicinity of the conductive pins 4d is made of a resin. Therefore, it is likely that the conductive pins 4d fly off under such a situation.

Particularly, in the case where the ignition device is integrated with the holder 6 in a resin, this structure can be easily adjusted and formed while the rupture open area is surely regulated by insert molding the reinforcement member 26 in the inside. This is effective particularly in the case of actuation at a high temperature, for example, when a vehicle fire occurs.

### INDUSTRIAL APPLICABILITY

In accordance with the gas generator of the present invention, heavy objects such as conductive pins are prevented from flying off to the outside even when actuated in a high pressure and at a high temperature, while it is possible to manufacture the corresponding structure with ease.

## Claims

1. A gas generator comprising, at least, a cup member (3) containing a gas generant (2) which burns to generate gas, and a holder (6) provided with an ignition device that has at least one conductive pin (4d) and ignites said gas generant (2),
wherein:
said holder (6) is provided with one or more through holes (6d) through which said conductive pins (4d) pass and one or more non-through holes (6e) through which said conductive pins (4d) do not pass; and
with respect to a rupture pressure from said gas generant (2) side to said holder (6), when a pressure occurs toward an outside of said gas generator, said rupture pressure of said through hole (6d) through which said conductive pin (4d) passes is adjusted to be higher than said rupture pressure of said non-through hole(6e) through which said conductive pin (4d) does not pass.

2. The gas generator as claimed in claim 1, wherein a rupture open area of said non-through hole (6e) through which said conductive pin (4d) does not pass is equal to or larger than a rupture open area of said thorough hole (6d) through which said conductive pin (4d) passes.

3. The gas generator as claimed in claim 1 or 2, wherein said holder (6) is formed integrally with said ignition device from resin.

4. The gas generator as claimed in claim 1 or 2, wherein:
said holder (6) is formed integrally with said ignition device from resin; and
a base portion (6f) of said non-through hole (6e) through which said conductive pin (4d) does not pass is made of said resin.

5. The gas generator as claimed in claim 1 or 2, wherein:
said holder (6) is formed integrally with said ignition device from resin;
a base portion (6f) of said non-through hole (6e) through which said conductive pin (4d) does not pass is made of said resin; and
said holder (6) is insert molded by said resin with a reinforcement member (26) which is made of a rigid material having a higher strength than said resin.

6. The gas generator as claimed in claim 1 or 2, wherein:
said holder (6) is formed integrally with said ignition device from resin;
a base portion (6f) of said non-through hole (6e) through which said conductive pin (4d) does not pass is made of said resin;
said holder (6) is insert molded by said resin with a reinforcement member (26) which is made of a rigid material having a higher strength than said resin; and
said reinforcement member (26) is provided with one or more through holes (6d) through which said conductive pins (4d) pass and one or more non-through holes (6g) through which said conductive pins (4d) do not pass.

7. The gas generator as claimed in any one of claims 1 through 6, wherein a depth (L) of said non-through hole (6e) through which said conductive pin (4d) does not pass is within a range of 60 to 90 % of a length (M) of said holder (6) from one end to the other end thereof inclusive of said non-through hole (6e) through which said conductive pin (4d) does not pass and said base portion (6f) of said non-through hole (6e).

8. The gas generator as claimed in any one of claims 1 through 7, wherein a relationship among a minimum thickness (T) of said base portion (6f) of a connector attachment hole (18) of said holder (6), a diameter (Y) of said base portion (6f) of said connector attachment hole (18) , said thickness (t) of said base portion (6f) of said non-through hole (6e) through which said conductive pin (4d) does not pass, and a diameter (y) of an inscribed circle in said non-through hole (6e), satisfies a following relationship:
"said thickness (t) of said base portion (6f) of said non-through hole (6e) through which said conductive pin (4d) does not pass < {said diameter (y) of said inscribed circle in said non-through hole (6e) x said minimum thickness (T) of said base portion (6f) of said connector attachment hole (18)}/ said diameter (Y) of said base portion (6f) of said connector attachment hole (18)".
